# EUROPÄISCHE PATENTSCHRIFT

(11) **EP 3 726 926 B1**
(45) Veröffentlichungstag und Bekanntmachung des Hinweises auf die Patenterteilung: **20.12.2023**
(21) Anmeldenummer: 20169801.6
(22) Anmeldetag: 16.04.2020
(51) Int. Cl.: H05B 3/34, H05B 3/16, F24D 13/02, H01R 4/04

(54) **HEIZMATTE**
HEATING MAT
TAPIS CHAUFFANT

(30) Priorität: 17.04.2019 AT 503462019
(43) Veröffentlichungstag der Anmeldung: 21.10.2020
(73) Patentinhaber: ATT advanced thermal technologies GmbH, 8143 Dobl-Zwaring (AT)
(72) Erfinder: Gruber, Manfred, 8510 Stainz (AT)
(74) Vertreter: IPrime Künsch Patentanwälte GmbH

(56) Entgegenhaltungen:
- WO-A1-2010/032840
- WO-A1-2017/209938
- US-A1- 2008 083 721
- US-A1- 2018 335 218
- US-A1- 2019 013 555
- US-A1- 2019 031 903
- US-B1- 6 184 496

## Beschreibung

Die Erfindung betrifft eine bahnförmige Heizmatte mit einem bahnförmigen, elektrisch isolierenden Träger, auf dem PTC-Widerstandselemente als Heizelemente sowie elektrische Leiterbahnen angeordnet sind, wobei die Leiterbahnen die PTC-Widerstandselemente mit Anschlussstellen für den Anschluss einer Stromversorgung verbinden, gemäß dem Oberbegriff von Anspruch 1.

Heizmatten der genannten Art werden etwa in der US 2018/0335218 A1 beschrieben und als biegeelastische Heizungen mit unterschiedlichem Aufbau ausgeführt und dienen etwa als Fußboden- oder Wandheizungen, Sitzheizungen, oder in industrieller Anwendung zur Beheizung von Komponenten. Weitere Heizmatten werden in der US 2019/031903 A1, US 2008/083721 A1, WO 2017/209938 A1, US 2019/013555 A1 und der US 6 184 496 B1 beschrieben. Eine beheizbare Windschutzscheibe für Autos wird in der WO 2010/032840 A1 beschrieben.

Nach Verlegung der Heizmatte können die elektrischen Leiterbahnen über die Anschlussstellen mit einer externen Stromversorgung verbunden werden, sodass die PTC-Widerstandselemente mit Strom durchflossen werden. Die Widerstandselemente stellen dabei einen elektrischen Widerstand dar, in denen Strom in Wärme umgewandelt wird, und in der vorliegenden Anwendung somit die gewünschte Wärmequelle bilden. PTC-Widerstandselemente, die auch als Kaltleiter bezeichnet werden, verfügen dabei über die Eigenschaft eines zunehmenden elektrischen Widerstandes bei steigender Temperatur. Für Heizmatten werden dabei vorzugsweise PTC-Widerstandselemente mit stark nicht-linearer Kennlinie verwendet, deren Widerstand bei steigender Temperatur zunächst langsam zunimmt, und bei einer für das jeweilige PTC-Widerstandselement charakteristischen Temperatur sprunghaft ansteigt, um danach bei weiter ansteigender Temperatur nur mehr langsam zuzunehmen. Diese charakteristische Temperatur wird auch als Abschalttemperatur bezeichnet, weil das betreffende PTC-Widerstandselement bei Überschreiten dieser Temperatur nur mehr geringe Heizleistung aufweist, sodass PTC-Widerstandselemente mit einer solchen nichtlinearen Kennlinie selbstregulierend sind und sich im Zuge der Anwendung eine Gleichgewichtstemperatur einstellt. Auf aufwändige Regelungseinrichtungen wie Temperaturfühler, Thermostate, Stromregler und dergleichen kann daher verzichtet werden. Die resultierende Heizleistung der Heizmatte ergibt sich einerseits aus der Gleichgewichtstemperatur der PTC-Widerstandselemente, aber andererseits auch aus der baulichen Ausführung hinsichtlich ihrer in der Heizmatte verbauten Länge, ihrer Anordnung auf der Heizmatte und dem Aufbau der Heizmatte, sowie der elektrischen Betriebsbedingungen hinsichtlich Strom, Spannung und Kontaktierung. Dabei wird grundsätzlich eine über die Oberfläche der Heizmatte möglichst gleichmäßige Wärmeverteilung angestrebt, um die Bildung von übermäßig erhitzten Bereichen ("Hot Spots") zu vermeiden, da in solchen Bereiche die verbauten Materialien stark beansprucht werden und die Lebensdauer der Heizmatte dadurch leidet.

In herkömmlicher Weise werden die PTC-Widerstandselemente und die sie mit Strom versorgenden Leiterbahnen daher möglichst flächendeckend und gleichmäßig über die gesamte Oberfläche der Heizmatte verteilt angeordnet. Diese Ausführungen verfügen aber über den Nachteil, dass sie nicht mehr beliebig zugeschnitten werden können. Sie werden entweder in Rollen mit vorgegebener Bahnlänge gekauft und verlegt, wie beispielsweise bei Fußbodenheizungen, oder maßgefertigt hergestellt und geliefert, wie etwa in industriellen Anwendungen. Eine je nach momentaner Anforderung abschneidbare Heizmatte ohne Beeinträchtigung ihrer Funktion wäre daher wünschenswert.

Es besteht daher das Ziel der Erfindung in der Bereitstellung einer Heizmatte, die einerseits zuverlässig und bei einfachem baulichen Aufbau eine gleichmäßige Wärmeentwicklung über ihre Oberfläche bereitstellt, und andererseits auch am Ort der Anwendung in unterschiedlichen Längen zugeschnitten werden kann.

Diese Ziele werden durch die Merkmale von Anspruch 1 erreicht. Anspruch 1 bezieht sich auf eine bahnförmige Heizmatte mit einem bahnförmigen, elektrisch isolierenden Träger, auf dem PTC-Widerstandselemente als Heizelemente sowie elektrische Leiterbahnen angeordnet sind, wobei die Leiterbahnen die PTC-Widerstandselemente mit Anschlussstellen für den Anschluss einer Stromversorgung verbinden und zwei in Längsrichtung des bahnförmigen Trägers verlaufende Hauptleiterbahnen sowie eine Mehrzahl an Nebenleiterbahnen, die in einer senkrecht zur Längsrichtung des bahnförmigen Trägers orientierten Querrichtung verlaufen, umfassen, wobei eine erste Hauptleiterbahn im Bereich einer ersten Längsrandkante des bahnförmigen Trägers angeordnet ist, die mit einer ersten Schar von parallel und im Abstand zueinander verlaufenden Nebenleiterbahnen elektrisch kontaktiert ist, sowie eine zweite Hauptleiterbahn im Bereich einer zweiten Längsrandkante des bahnförmigen Trägers angeordnet ist, die mit einer zweiten Schar von parallel und im Abstand zueinander verlaufenden Nebenleiterbahnen elektrisch kontaktiert ist, wobei in Längsrichtung des bahnförmigen Trägers gesehen eine Nebenleiterbahn der ersten Schar auf eine Nebenleiterbahn der zweiten Schar folgt und jede Nebenleiterbahn der ersten Schar eine ihr jeweils zugeordnete Nebenleiterbahn der zweiten Schar aufweist. Erfindungsgemäß wird hierbei vorgeschlagen, dass innere Leiterbahnen vorgesehen sind, mit denen die PTC-Widerstandselemente mit den einander jeweils zugeordneten Nebenleiterbahnen elektrisch verbunden sind, und die einander jeweils zugeordneten Nebenleiterbahnen in Querrichtung verlaufende, streifenförmige Heizflächenbereiche bilden, zwischen denen in Querrichtung verlaufende, streifenförmige und von Nebenleiterbahnen und inneren Leiterbahnen freie Trennbereiche ausgebildet sind. Die erfindungsgemäße Aufgabe wird somit mithilfe einer neuartigen Anordnung der Leiterbahnen und der mit ihnen verbundenen Heizelemente erreicht, indem die Heizelemente in Heizflächenbereichen angeordnet sind, die in Querrichtung der Heizmatte streifenförmig verlaufen. Die Querrichtung ist dabei senkrecht zur Längsrichtung des bahnförmigen Trägers orientiert, wobei es sich bei der Längsrichtung naturgemäß um jene Abmessung der bahnförmigen Heizmatte handelt, die die längere Abmessung der Heizmatte darstellt, und die Abmessung der bahnförmigen Heizmatte in Querrichtung die kürzere Abmessung ist. Die Heizflächenbereiche stellen die beheizten Bereiche der Heizmatte dar und werden durch die von Nebenleiterbahnen und inneren Leiterbahnen freien Trennbereiche getrennt, die sich aufgrund der Beabstandung der Nebenleiterbahnen ergeben. Die Heizmatte kann daher in den Trennbereichen durch Schnittlinien, die in Querrichtung verlaufen, abgeschnitten werden. Dabei werden die im Bereich der beiden Längsrandkanten in Längsrichtung des bahnförmigen Trägers verlaufenden Hauptleiterbahnen durchtrennt, wobei die so erzeugten freien Enden der Hauptleiterbahnen die neuen Anschlussstellen für die Leiterbahnen bilden, wie noch näher erläutert werden wird. Die Funktion der verbleibenden Heizmatte wird durch den Zuschnitt jedoch nicht beeinträchtigt, sodass die Heizmatte mit einer nur mehr durch die Breite eines Heizflächenbereiches begrenzten Genauigkeit in der gewünschten Länge zugeschnitten werden kann. Um die Schnittsetzung zu erleichtern, können beispielsweise entlang der Mittellinien der Trennbereiche in Querrichtung verlaufende, strichlierte Linien eingezeichnet sein, die dem Benutzer die bevorzugten Schnittlinien anzeigen.

Wie bereits erwähnt wurde, wird die Heizleistung der Heizmatte insbesondere auch durch die Länge der PTC-Widerstandselemente bestimmt. Erfindungsgemäß sind diese PTC-Widerstandselemente zwischen zwei einander jeweils zugeordneten Nebenleiterbahnen angeordnet. Um eine kompakte Anordnung der Heizelemente innerhalb der Heizflächenbereiche zu ermöglichen wird vorzugsweise vorgeschlagen, dass in einem streifenförmigen Heizflächenbereich zwischen den einander jeweils zugeordneten Nebenleiterbahnen mehrere, über die Querrichtung des bahnförmigen Trägers in Parallelschaltung zueinander verteilt angeordnete Heizelemente angeordnet sind, wobei die Heizelemente jeweils aus einer Abfolge von PTC-Widerstandselementen gebildet werden, die mittels der inneren Leiterbahnen in einer seriellen Schaltung miteinander und mit den Nebenleiterbahnen des betreffenden Heizflächenbereiches verbunden sind. Da die über die Querrichtung des bahnförmigen Trägers verteilt angeordneten Heizelemente in Parallelschaltung mit den Nebenleiterbahnen verbunden sind, liegt an jedem Heizelement des Heizflächenbereiches dieselbe Spannung an. Jedes der Heizelemente wird hingegen aus einer Abfolge von PTC-Widerstandselementen gebildet, die mittels der inneren Leiterbahnen in einer seriellen Schaltung miteinander und mit den Nebenleiterbahnen des betreffenden Heizflächenbereiches verbunden sind. Wie im Folgenden noch näher ausgeführt werden wird, ermöglicht die serielle Schaltung der PTC-Widerstandselemente eine räumlich kompakte Anordnung der PTC-Widerstandselemente, sodass die einzelnen Heizelemente auf vergleichsweise kleinen Flächenelementen verwirklicht werden können. Aufgrund des Abstands nebeneinander liegender Heizelemente ergibt sich somit eine rasterartige Anordnung der Heizelemente über die Heizmatte.

Eine konkrete Ausführung sieht etwa vor, dass es sich bei dem bahnförmigen Träger um eine Kunststofffolie handelt, beispielsweise um eine Polyethylenfolie. Kunststofffolien stellen einerseits eine ausreichende elektrische Isolierung gegenüber den Leiterbahnen sicher, und ermöglichen andererseits sehr dünne und biegsame Ausführungen. Zudem stehen Kunststoffe zur Verfügung, die beispielsweise über Siebdruck bedruckbar sind.

Gemäß einer vorzugsweisen Ausführung wird daher vorgeschlagen, dass die PTC-Widerstandselemente aus einer erhärteten, kohlenstoffbasierenden Paste gefertigt sind. Solche Pasten sind kommerziell erhältlich und werden auch als Carbon-Pasten oder Carbonlack bezeichnet. Sie eignen sich besonders für die Ausführung von Heizelementen, da sie bei Stromdurchfluss rasch aufheizen und schließlich selbstregelnd eine Gleichgewichtstemperatur erreichen. Die kohlenstoffbasierende Paste kann bei Raumtemperatur in viskoser Form mittels Siebdruck in der gewünschten Anordnung auf die Kunststofffolie aufgebracht und thermisch gehärtet werden, wodurch eine kostengünstige Herstellung der Heizmatte möglich ist. In entsprechender Form wird auch vorgeschlagen, dass die Leiterbahnen aus einer erhärteten, silberbasierenden Paste gefertigt sind. Solche silberbasierenden Pasten werden auch als Silberlack bezeichnet und können in ähnlicher Weise in viskoser Form mittels Siebdruck mit dem gewünschten Verlauf auf die Kunststofffolie aufgedruckt werden, wobei es sich als zweckmäßig erwiesen hat, zuerst die Leiterbahnen aufzudrucken und danach die PTC-Widerstandselemente.

Hierbei wird insbesondere vorgeschlagen, dass die eine Nebenleiterbahn der ersten Schar mit der ihr zugeordneten Nebenleiterbahn der zweiten Schar verbindenden PTC-Widerstandselemente jeweils als nebeneinander liegende und in Längsrichtung des bahnförmigen Trägers angeordnete Streifenelemente ausgeführt sind. Diese Streifenelemente sind wie bereits ausgeführt mittels der inneren Leiterbahnen seriell miteinander verbunden.

Eine serielle Anordnung von PTC-Widerstandselementen neigt grundsätzlich zu einem instabilen Verhalten, da sich stets eines der seriell verbundenen PTC-Widerstandselemente zunächst geringfügig stärker erwärmt als die anderen PTC-Widerstandselemente und folglich über einen größeren Widerstand verfügt. An diesem PTC-Widerstandselement fällt somit eine größere Spannung ab als an den anderen PTC-Widerstandselementen derselben Serienschaltung, sodass es sich noch schneller aufheizt. Die seriell geschalteten PTC-Widerstandselemente eines Heizelements neigen daher zu unterschiedlichem Aufheizverhalten. Dieser Effekt wird zwar durch die räumlich kompakte Anordnung innerhalb des Flächenelements eines Heizelements verringert, dennoch wird vorzugsweise vorgeschlagen, dass die Heizelemente und die Leiterbahnen auf derselben Oberfläche des bahnförmigen Trägers angeordnet sind, und auf der gegenüberliegenden Oberfläche des bahnförmigen Trägers eine Aluminiumschicht angeordnet ist. Die Aluminiumschicht verfügt über eine vergleichsweise hohe thermische Leitfähigkeit, sodass die von einem PTC-Widerstandselement abgegebene Wärme aufgenommen und über das Flächenelement des betreffenden Heizelements sowie in weiterer Folge über die gesamte Oberfläche der Heizmatte ausgleichend verteilt wird.

Da Aluminium aber ein Material mit vergleichsweise hoher elektrischer Leitfähigkeit ist, könnte sich im Zuge des Zuschnitts der Heizmatte im Bereich der freien Enden der Hauptleiterbahnen die Gefahr eines Kurzschlusses ergeben. Daher wird vorzugsweise vorgeschlagen, dass sich die Aluminiumschicht lediglich über den zentralen Bereich des bahnförmigen Trägers erstreckt und ein Randbereich entlang der beiden Längsrandkanten frei von Aluminium ist, in dem auf der gegenüberliegenden Oberfläche die Hauptleiterbahnen verlaufen. Mithilfe dieser Maßnahme wird die Gefahr eines möglichen Kurzschlusses zwischen der Aluminiumschicht und den Hauptleiterbahnen vermieden.

Hinsichtlich der Ausführung der Anschlussstellen wird vorzugsweise vorgeschlagen, dass die Anschlussstellen an den Hauptleiterbahnen angeordnet sind und jeweils als ein Kontaktierungselement mit einem kupferbeschichteten, plättchenförmigen Anschlussstück ausgeführt sind, das auf einer ersten Plättchenoberfläche mit einer elektrisch leitfähigen Klebefläche zur Herstellung einer elektrisch leitfähigen Klebeverbindung mit der jeweiligen Hauptleiterbahn versehen ist. Das Kontaktierungselement ist mit der elektrischen Kabelzuführung einer externen Stromversorgung verbunden und kann nach dem Zuschnitt der Heizmatte auf das freie Ende der jeweiligen Hauptleiterbahn mit seiner elektrisch leitfähigen Klebefläche aufgeklebt werden. Zur Befestigung können allfällige Schutzfolien der Heizmatte nach dem Zuschnitt eingeschnitten werden, um das freie Ende der betreffenden Hauptleiterbahn freizulegen und das Kontaktierungselement aufkleben zu können, wie noch näher beschrieben werden wird. Die so hergestellte Anschlussstelle kann in weiterer Folge noch mit einem Klebeband elektrisch isoliert abgedeckt werden, beispielsweise mit einem Polyimidklebeband.

Die Erfindung wird in weiterer Folge anhand von Ausführungsbeispielen mithilfe der beiliegenden Zeichnungen näher erläutert. Es zeigen hierbei die
Fig. 1 eine Ausführungsform für die Anordnung der Heizelemente bei einer erfindungsgemäßen Heizmatte,
Fig. 2 eine Detailansicht der Anordnung und der elektrischen Kontaktierung der Heizelemente in den Heizflächenbereichen für zwei nebeneinander liegende Heizflächenbereiche,
Fig. 3 eine Detailansicht eines Heizelements und einer möglichen Ausführungsform für die Anordnung der PTC-Widerstandselemente in einem Heizelement,
Fig. 4 eine Ausführungsform für den Aufbau einer erfindungsgemäßen Heizmatte,
Fig. 5 eine Darstellung der Kennlinie für eine Ausführungsform der PTC-Widerstandselemente,
Fig. 6 eine Darstellung des Heizleistungsverlaufs für eine erfindungsgemäße Heizmatte gemäß der Fig. 1 bis 5,
Fig. 7 eine Ausführungsform für eine Anschlussstelle,
Fig. 8 eine Darstellung für den Anschluss einer Anschlussstelle gemäß der Fig. 7 an eine erfindungsgemäße Heizmatte, und die
Fig. 9 eine Darstellung zur Verlegung mehrerer bahnförmiger Heizmatten gemäß der Erfindung und ihre elektrische Verbindung.

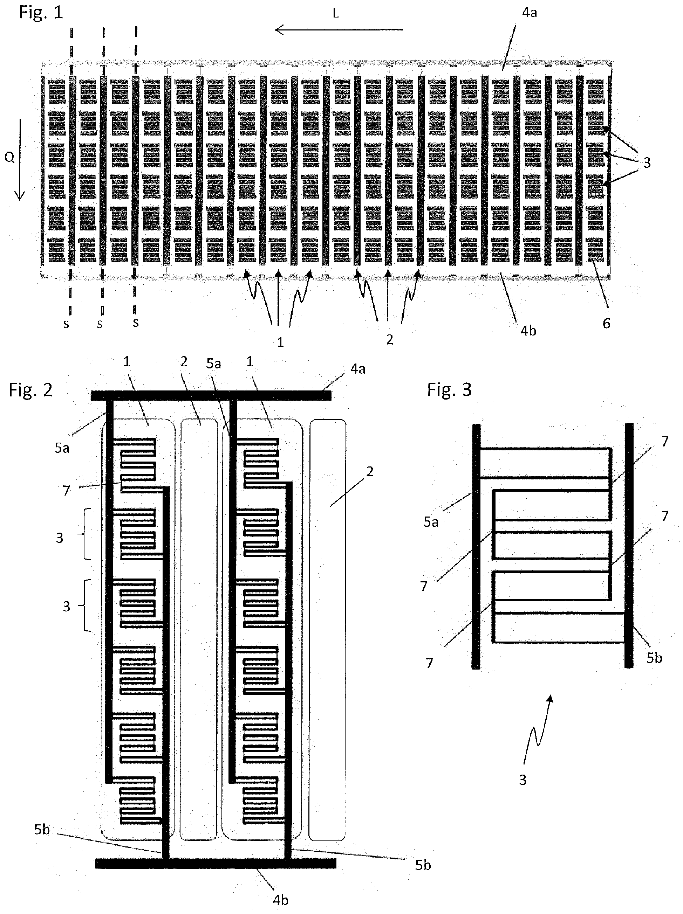

Zunächst wird auf die Fig. 1 Bezug genommen, die eine Ausführungsform einer erfindungsgemäßen, bahnförmigen Heizmatte mit einer Längsrichtung L und einer Querrichtung Q zeigt. Dabei sind die in Querrichtung Q verlaufenden, streifenförmigen Heizflächenbereiche 1 ersichtlich, zwischen denen in Querrichtung Q verlaufende, streifenförmige Trennbereiche 2 ausgebildet sind, die jeweils zwei in Längsrichtung L gesehen nebeneinander liegende Heizflächenbereiche 2 trennen. Im Bereich der beiden Längsrandkanten der Heizmatte verläuft jeweils eine elektrisch leitfähige Hauptleiterbahn 4a, 4b in Längsrichtung L der Heizmatte. Die streifenförmigen Heizflächenbereiche 1 weisen im gezeigten Ausführungsbeispiel jeweils sechs über die Querrichtung Q verteilt angeordnete Heizelemente 3 auf. Die Anzahl der Heizelemente 3 in jedem Heizflächenbereich 1 wird freilich in Abhängigkeit von der Breite der Heizmatte in Querrichtung Q gewählt. Jedes Heizelement 3 wird im gezeigten Ausführungsbeispiel der Fig. 1 aus einer Abfolge von fünf PTC-Widerstandselementen 6 gebildet, die als nebeneinander liegende und in Längsrichtung L der Heizmatte angeordnete Streifenelemente ausgeführt sind. Die Anzahl der PTC-Widerstandselemente 6 je Heizelement 3 wird in Abhängigkeit von der benötigten Heizleistung gewählt werden. Auf der linken Seite der Fig. 1 sind beispielhaft drei Schnittlinien s eingezeichnet, die entlang der Trennbereiche 2 verlaufen und einen Zuschnitt der Heizmatte erlauben. Um einen solchen Zuschnitt zu ermöglichen, sind die Hauptleiterbahnen 4a, 4b mit den PTC-Widerstandselementen 6 der Heizelemente 3 gemäß einer Anordnung verbunden, die anhand der Fig. 2 und 3 erläutert werden soll.

Hierbei ist die erste Hauptleiterbahn 4a mit einer ersten Schar von parallel und im Abstand zueinander verlaufenden Nebenleiterbahnen 5a elektrisch kontaktiert, die sich in Querrichtung Q der Heizmatte in Richtung der zweiten Hauptleiterbahn 4b erstrecken und bei dem der zweiten Hauptleiterbahn 4b nächstgelegenen Heizelement enden, wie in der Fig. 2 ersichtlich ist. Die zweite Hauptleiterbahn 4b ist mit einer zweiten Schar von parallel und im Abstand zueinander verlaufenden Nebenleiterbahnen 5b elektrisch kontaktiert, die sich in Querrichtung Q der Heizmatte in Richtung der ersten Hauptleiterbahn 4a erstrecken und bei dem der ersten Hauptleiterbahn 4a nächstgelegenen Heizelement enden. In Längsrichtung L der Heizmatte gesehen folgt dabei eine Nebenleiterbahn 5a der ersten Schar auf eine Nebenleiterbahn 5b der zweiten Schar. Jede Nebenleiterbahn 5a der ersten Schar weist dabei eine ihr jeweils zugeordnete Nebenleiterbahn 5b der zweiten Schar auf, mit der sie über die PTC-Widerstandselemente 6 und die inneren Leiterbahnen 7 elektrisch verbunden ist. Die Heizelemente 3 eines streifenförmigen Heizflächenbereiches 1 sind jeweils in Parallelschaltung zwischen den einander jeweils zugeordneten Nebenleiterbahnen 5a, 5b angeordnet. Die Heizelemente 3 werden hingegen jeweils aus einer Abfolge von PTC-Widerstandselementen 6 gebildet, die mittels der inneren Leiterbahnen 7 in einer seriellen Schaltung miteinander und mit den Nebenleiterbahnen 5a, 5b des betreffenden Heizflächenbereiches 1 verbunden sind, wie insbesondere in der Fig. 3 ersichtlich ist. Zwischen den in Querrichtung Q verlaufenden, streifenförmigen Heizflächenbereichen 1 bilden sich dabei die in Querrichtung Q verlaufenden, streifenförmigen Trennbereiche 2 aus, die somit frei von Nebenleiterbahnen 5 und inneren Leiterbahnen 7 sind.

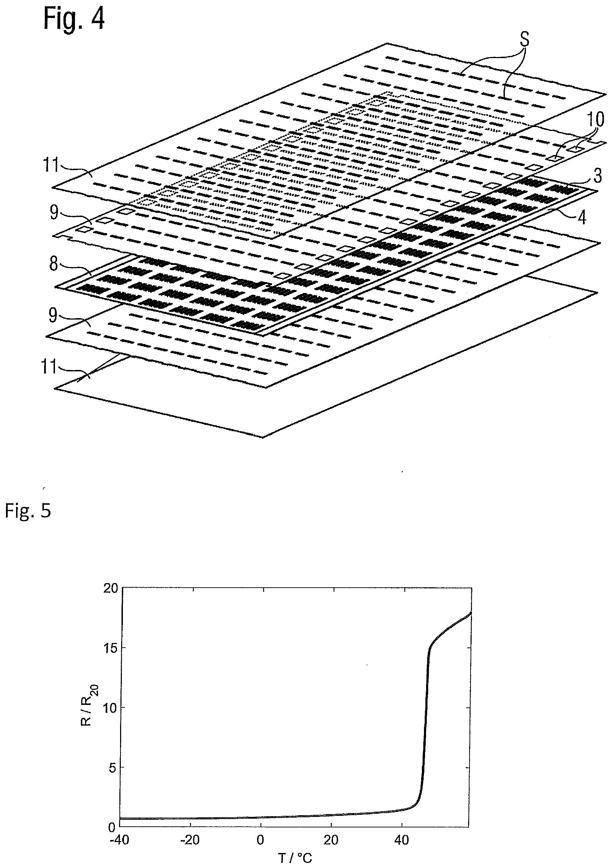

Ein möglicher Aufbau einer erfindungsgemäßen Heizmatte soll anhand der Fig. 4 erläutert werden. Gemäß des gezeigten Ausführungsbeispiels weist die Heizmatte einen Schichtaufbau aus mehreren Schichten auf. Eine mittlere Schicht wird von einem bahnförmigen Träger 8 gebildet, der im gezeigten Ausführungsbeispiel als einseitig aluminiumbeschichtete PET-Kunststofffolie ausgeführt ist. Die Aluminiumschicht erstreckt sich zudem lediglich über den zentralen Bereich des bahnförmigen Trägers 8, sodass ein Randbereich entlang der beiden Längsrandkanten des bahnförmigen Trägers 8 frei von Aluminium ist. Auf der der Aluminiumbeschichtung abgewandten Seite der PET-Kunststofffolie sind die die Heizelemente 3 bildenden PTC-Widerstandselemente 6 angeordnet, sowie sämtliche Leiterbahnen, nämlich die im Randbereich des bahnförmigen Trägers 8 in Längsrichtung L verlaufenden Hauptleiterbahnen 4, die in Querrichtung Q den zentralen Bereich des bahnförmigen Trägers 8 querenden Nebenleiterbahnen 5, sowie die in den zentralen Bereichen des bahnförmigen Trägers 8 verlaufenden inneren Leiterbahnen 7. Die Hauptleiterbahnen 4, die Nebenleiterbahnen 5 sowie die inneren Leiterbahnen 7 sind aus einer erhärteten, silberbasierenden Paste gefertigt, die in viskoser Form mittels Siebdruck mit dem gewünschten Verlauf auf die Kunststofffolie aufgebracht und thermisch ausgehärtet wird. Die PTC-Widerstandselemente 6 sind aus einer erhärteten, kohlenstoffbasierenden Paste gefertigt, die in weiterer Folge auch als Carbon-Paste bezeichnet wird und ebenfalls bei Raumtemperatur in viskoser Form mittels Siebdruck in der gewünschten Anordnung auf die Kunststofffolie aufgebracht und thermisch ausgehärtet wird. Die genannten Leiterbahnen und die Heizelemente 3 können nach ihrem Auftrag mit einer Schutzlackschicht versehen werden. Der auf diese Weise gebildete Folienaufbau wird auf seinen beiden Oberflächen mit einer Klebefolienbahn 9 versehen, die auch eine Trittschalldämmung aufweisen kann. Jene Klebefolienbahn 9, die auf der mit den Leiterbahnen und den Heizelementen 3 versehenen Oberfläche des bahnförmigen Trägers 8 angeordnet ist, weist im gezeigten Ausführungsbeispiel entlang ihrer Längsrandkanten verteilt angeordnete Ausnehmungen 10 auf, die jeweils in den Trennbereichen 2 liegen und deren Zweck noch näher erläutert werden wird. Die beiden gegenüberliegenden Ausnehmungen 10 eines Trennbereiches 2 sind mit aufgedruckten Schnittlinien s verbunden. Die beiden äußersten Schichten der gezeigten Heizmatte werden jeweils durch eine Schutzfolie 11 gebildet, die etwa aus Polypropylen gefertigt ist. Der gesamte Aufbau weist im gezeigten Ausführungsbeispiel eine Aufbauhöhe von 3.4 mm auf, und in Längsrichtung L beispielsweise eine Länge von 15m sowie in Querrichtung eine Breite von 0.5m. Der Abstand der Schnittlinien s beträgt im gezeigten Ausführungsbeispiel 73mm, sodass die Heizmatte alle 73 mm abgeschnitten werden kann.

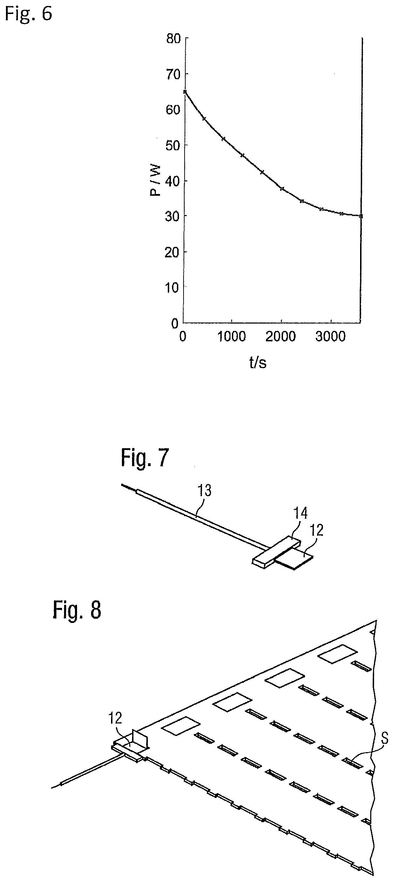

Wird an die Hauptleiterbahnen 4 eine Wechselspannung von in der Regel 230 V angelegt, so fließt durch die Leiterbahnen ein Strom, der in den PTC-Widerstandselementen 6 in Wärme umgewandelt wird, die zunächst die PTC-Widerstandselemente 6 erwärmt. Dadurch ändert sich auch der elektrische Widerstand der PTC-Widerstandselemente 6 anhand einer Kennlinie, die für die verwendete Carbon-Paste in der Fig.5 dargestellt ist. Die Kennlinie zeigt bei etwa 45°C, die in weiterer Folge auch als Abschalttemperatur bezeichnet wird, einen markanten Anstieg. Simulationen sowie Messungen des Aufheizverhaltens für den in der Fig. 4 gezeigten Aufbau zeigen einen zeitlichen Verlauf, der in der Fig. 6 dargestellt ist. Nach einer anfänglichen Leistungsaufnahme von etwa 65 W stellt sich bei einer Umgebungstemperatur von 20°C und einem Wärmeübergangskoeffizienten von 2 W/m²K nach etwa einer Stunde eine Leistungsaufnahme von etwa 30 W ein. Das ergibt eine flächenbezogene Heizleistung der Heizelemente 3 von etwa 350 W/m² und eine über die gesamte Oberfläche der Heizmatte gemittelte flächenbezogene Heizleistung von etwa 100 W/m². Die in den PTC-Widerstandselementen 6 auftretende Kerntemperatur der Heizmatte beträgt maximal 45°C.

Anhand der Fig. 7 und 8 wird eine vorteilhafte Ausführung einer Anschlussstelle für die erfindungsgemäße Heizmatte erläutert, die über eine Aufbauhöhe verfügt, die jene der Heizmatte sogar noch unterschreitet. Hierfür wird ein Kontaktierungselement 12 mit einem kupferbeschichteten, plättchenförmigen Anschlussstück in Form einer geätzten Kupferplatine verwendet, die durch Löten mit einem Kabel 13 verbunden ist. Zum Schutz der Verbindung wird der Kabelanschluss mit einem Kunststoffgehäuse 14 umspritzt. Auf der Oberseite des plättchenförmigen Anschlussstückes ist ein Klebeband mit einer Abdeckfolie aufgebracht. Auf der Unterseite des plättchenförmigen Anschlussstückes ist ein elektrisch leitfähiger Klebestreifen zur Herstellung einer elektrisch leitfähigen Verbindung mit den Hauptleiterbahnen 4 angeordnet. Um die Anschlussstelle herzustellen wird zunächst nach dem Zuschneiden der Heizmatte die Klebefolienbahn 9 sowie die Schutzfolie 11 im Bereich der durch den Zuschnitt neu entstandenen freien Enden der Hauptleiterbahnen 4 in Längsrichtung L geringfügig eingeschnitten und aufgeklappt, was durch die Ausnehmungen 10 erleichtert wird. In weiterer Folge kann das plättchenförmige Anschlussstück mit seinem leitfähigen Klebestreifen auf das frei gelegte Ende der jeweiligen Hauptleiterbahn 4 aufgeklebt werden. Nach dem Abziehen der Abdeckfolie kann das aufgeklappte Stück der Klebefolienbahn 9 sowie der Schutzfolie 11 auf das Klebeband des Kontaktierungselements 12 aufgeklebt werden. Abschließend kann die so erstellte Anschlussstelle mit einem Polyimidklebeband isoliert werden, um sie gegen Feuchtigkeit und Schmutz zu schützen.

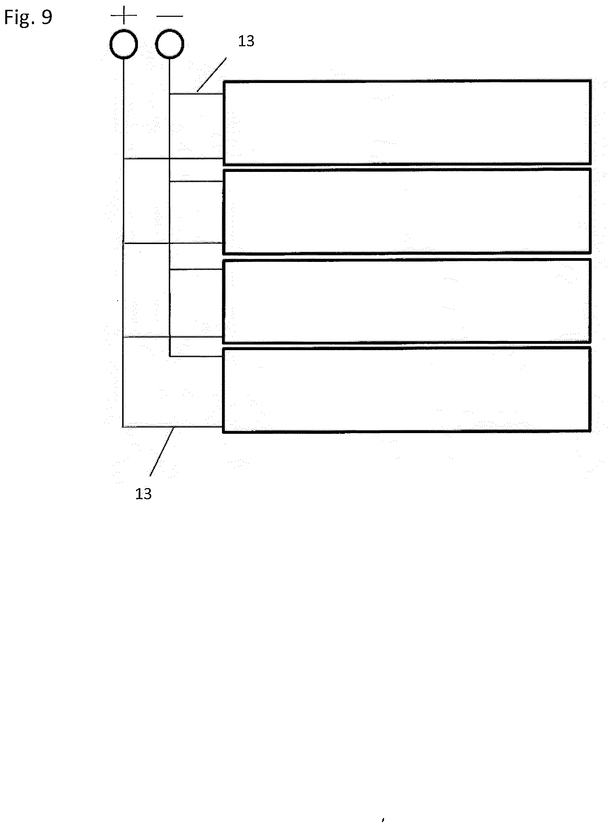

Falls größere Flächen zu beheizen sind, können auch mehrere Heizmatten nebeneinander auf Stoß verlegt und anschließend mit einer gemeinsamen Stromversorgung verbunden werden, wie anhand der Fig. 9 erläutert wird. Die Fig.9 zeigt mehrere Heizmatten, im gezeigten Ausführungsbeispiel vier Heizmatten, deren jeweilige erste Hauptleiterbahn 4a in Parallelschaltung mit dem Minuspol einer gemeinsamen Stromquelle verbunden wird, und deren zweite Hauptleiterbahn 4b in Parallelschaltung mit dem Pluspol einer gemeinsamen Stromquelle verbunden wird. Durch Aneinanderlegen einer beliebigen Anzahl an Heizmatten sowie durch jeweils erforderliches Zuschneiden der Länge dieser Heizmatten können somit auch größere Flächen nach Maß verlegt werden.

Somit wird eine Heizmatte verwirklicht, die einerseits zuverlässig und bei einfachem baulichen Aufbau eine gleichmäßige Wärmeentwicklung über ihre Oberfläche bereitstellt, und andererseits auch am Ort der Anwendung in unterschiedlichen Längen zugeschnitten werden kann.

## Patentansprüche

1. Bahnförmige Heizmatte mit einem bahnförmigen, elektrisch isolierenden Träger (8), auf dem PTC-Widerstandselemente (6) als Heizelemente (3) sowie elektrische Leiterbahnen angeordnet sind, wobei die Leiterbahnen die PTC-Widerstandselemente (6) mit Anschlussstellen für den Anschluss einer Stromversorgung verbinden und zwei in Längsrichtung (L) des bahnförmigen Trägers (8) verlaufende Hauptleiterbahnen (4) sowie eine Mehrzahl an Nebenleiterbahnen (5), die in einer senkrecht zur Längsrichtung (L) des bahnförmigen Trägers (8) orientierten Querrichtung (Q) verlaufen, umfassen, wobei eine erste Hauptleiterbahn (4a) im Bereich einer ersten Längsrandkante des bahnförmigen Trägers (8) angeordnet ist, die mit einer ersten Schar von parallel und im Abstand zueinander verlaufenden Nebenleiterbahnen (5a) elektrisch kontaktiert ist, sowie eine zweite Hauptleiterbahn (4b) im Bereich einer zweiten Längsrandkante des bahnförmigen Trägers (8) angeordnet ist, die mit einer zweiten Schar von parallel und im Abstand zueinander verlaufenden Nebenleiterbahnen (5b) elektrisch kontaktiert ist, wobei in Längsrichtung (L) des bahnförmigen Trägers (8) gesehen eine Nebenleiterbahn (5a) der ersten Schar auf eine Nebenleiterbahn (5b) der zweiten Schar folgt und jede Nebenleiterbahn (5a) der ersten Schar eine ihr jeweils zugeordnete Nebenleiterbahn (5b) der zweiten Schar aufweist, **dadurch gekennzeichnet, dass** innere Leiterbahnen (7) vorgesehen sind, mit denen die PTC-Widerstandselemente (6) mit den einander jeweils zugeordneten Nebenleiterbahnen (5) elektrisch verbunden sind, und die einander jeweils zugeordneten Nebenleiterbahnen (5) in Querrichtung (Q) verlaufende, streifenförmige Heizflächenbereiche (1) bilden, zwischen denen in Querrichtung (Q) verlaufende, streifenförmige und von Nebenleiterbahnen (5) und inneren Leiterbahnen (7) freie Trennbereiche (2) ausgebildet sind.

2. Bahnförmige Heizmatte nach Anspruch 1, **dadurch gekennzeichnet, dass** in einem streifenförmigen Heizflächenbereich (1) zwischen den einander jeweils zugeordneten Nebenleiterbahnen (5) mehrere, über die Querrichtung (Q) des bahnförmigen Trägers (8) in Parallelschaltung zueinander verteilt angeordnete Heizelemente (3) angeordnet sind, wobei die Heizelemente (3) jeweils aus einer Abfolge von PTC-Widerstandselementen (6) gebildet werden, die mittels der inneren Leiterbahnen (7) in einer seriellen Schaltung miteinander und mit den Nebenleiterbahnen (5) des betreffenden Heizflächenbereiches (1) verbunden sind.

3. Bahnförmige Heizmatte nach Anspruch 1 oder 2, **dadurch gekennzeichnet, dass** es sich bei dem bahnförmigen Träger (8) um eine Kunststofffolie handelt.

4. Bahnförmige Heizmatte nach einem der Ansprüche 1 bis 3, **dadurch gekennzeichnet, dass** die PTC-Widerstandselemente (6) aus einer erhärteten, kohlenstoffbasierenden Paste gefertigt sind.

5. Bahnförmige Heizmatte nach einem der Ansprüche 1 bis 4, **dadurch gekennzeichnet, dass** die Leiterbahnen (4, 5, 7) aus einer erhärteten, silberbasierenden Paste gefertigt sind.

6. Bahnförmige Heizmatte nach einem der Ansprüche 1 bis 5, **dadurch gekennzeichnet, dass** die eine Nebenleiterbahn (5a) der ersten Schar mit der ihr zugeordneten Nebenleiterbahn (5b) der zweiten Schar verbindenden PTC-Widerstandselemente (6) jeweils als nebeneinander liegende und in Längsrichtung (L) des bahnförmigen Trägers (8) angeordnete Streifenelemente ausgeführt sind.

7. Bahnförmige Heizmatte nach einem der Ansprüche 1 bis 6, **dadurch gekennzeichnet, dass** die Heizelemente (3) und die Leiterbahnen (4, 5, 7) auf derselben Oberfläche des bahnförmigen Trägers (8) angeordnet sind, und auf der gegenüberliegenden Oberfläche des bahnförmigen Trägers (8) eine Aluminiumschicht angeordnet ist.

8. Bahnförmige Heizmatte nach Anspruch 7, **dadurch gekennzeichnet, dass** sich die Aluminiumschicht lediglich über den zentralen Bereich des bahnförmigen Trägers (8) erstreckt und ein Randbereich entlang der beiden Längsrandkanten frei von Aluminium ist, in dem auf der gegenüberliegenden Oberfläche die Hauptleiterbahnen (4) verlaufen.

9. Bahnförmige Heizmatte nach einem der Ansprüche 1 bis 8, **dadurch gekennzeichnet, dass** die Anschlussstellen an den Hauptleiterbahnen (4) angeordnet sind und jeweils als ein Kontaktierungselement (12) mit einem kupferbeschichteten, plättchenförmigen Anschlussstück ausgeführt sind, das auf einer ersten Plättchenoberfläche mit einer elektrisch leitfähigen Klebefläche zur Herstellung einer elektrisch leitfähigen Klebeverbindung mit der jeweiligen Hauptleiterbahn (4) versehen ist.

## Claims

1. A web-like heating mat having a web-like, electrically insulating substrate (8), on which PTC resistance elements (6) as heating elements (3) and also electrical conductor tracks are arranged, the conductor tracks connecting the PTC resistance elements (6) to connection points for connecting a power supply, and comprising two main conductor tracks (4), which run in the longitudinal direction (L) of the web-like substrate (8), a plurality of secondary conductor tracks (5), which run in a transverse direction (Q) which is orientated perpendicularly to the longitudinal direction (L) of the web-like substrate (8), wherein a first main conductor track (4a) is arranged in the region of a first longitudinal outer edge of the web-like substrate (8), which is electrically contacted with a first assemblage of secondary conductor tracks (5a) which run parallel with and spaced from one another, and a second main conductor track (4b) is arranged in the region of a second longitudinal outer edge of the web-like substrate (8), which is electrically contacted with a second assemblage of secondary conductor tracks (5b) which run parallel with and spaced from one another, wherein, as viewed in the longitudinal direction (L) of the web-like substrate (8), a secondary conductor track (5a) of the first assemblage follows a secondary conductor track (5b) of the second assemblage and each secondary conductor track (5a) of the first assemblage has a secondary conductor track (5b) of the second assemblage assigned to it in each case **characterized in that** inner conductor tracks (7) are provided with which the PTC resistor elements (6) are electrically connected to the secondary conductor tracks (5) assigned to one another in each case, and the secondary conductor tracks (5), which are assigned to one another in each case, form strip-shaped heating surface regions (1), which run in the transverse direction (Q), between which strip-shaped separation areas (2), which run in the transverse direction (Q) and are free from secondary conductor tracks (5) and inner conductor tracks (7), are formed.

2. The web-like heating mat according to Claim 1, **characterized in that** a plurality of heating elements (3), which are arranged in a distributed manner over the transverse direction (Q) of the web-like substrate (8) such that they are connected in parallel to one another, are arranged in a strip-shaped heating surface region (1) between the secondary conductor tracks (5) which are assigned to one another in each case, wherein the heating elements (3) are in each case formed from a sequence of PTC resistance element (6) which are connected to one another by means of the inner conductor tracks (7) in a series circuit and to the secondary conductor tracks (5) of the relevant heating surface region (1).

3. The web-like heating mat according to Claim 1 or 2, **characterized in that** the web-like substrate (8) is a plastic film.

4. The web-like heating mat according to one of Claims 1 to 3, **characterized in that** the PTC resistance elements (6) are manufactured from a hardened, carbon-based paste.

5. The web-like heating mat according to one of Claims 1 to 4, **characterized in that** the conductor tracks (4, 5, 7) are manufactured from a hardened, silver-based paste.

6. The web-like heating mat according to one of Claims 1 to 5, **characterized in that** the PTC resistance elements (6), which connect a secondary conductor track (5a) of the first assemblage to the secondary conductor track (5b) of the second assemblage which is associated with it, are in each case realized as strip elements which lie next to one another and are arranged in the longitudinal direction (L) of the web-like substrate (8).

7. The web-like heating mat according to one of Claims 1 to 6, **characterized in that** the heating elements (3) and the conductor tracks (4, 5, 7) are arranged on the same surface of the web-like substrate (8) and an aluminium layer is arranged on the opposite surface of the web-like substrate (8).

8. The web-like heating mat according to Claim 7, **characterized in that** the aluminium layer only extends over the central region of the web-like substrate (8) and an edge region along the two longitudinal outer edges is free from aluminium, in which the main conductor tracks (4) run on the opposite surface.

9. The web-like heating mat according to one of Claims 1 to 8, **characterized in that** the connection points are arranged on the main conductor tracks (4) and are in each case realized as a contacting element (12) having a copper-coated, lamina-like connecting piece which is provided on a first lamina surface with an electrically conductive adhesive surface for producing an electrically conductive adhesive connection to the respective main conductor track (4).

## Revendications

1. Tapis chauffant en forme de bande comportant un support isolant électrique en forme de bande (8), sur lequel sont disposés des éléments de résistance CTP (6) en tant qu'éléments chauffants (3) ainsi que des circuits conducteurs électriques, les pistes conducteurs reliant les éléments de résistance CTP (6) à des points de connexion pour le branchement d'une alimentation électrique, et comprenant deux circuits conducteurs principaux (4), qui s'étendent dans la direction longitudinale (L) du support en forme de bande (8), plusieurs circuits conducteurs secondaires (5) qui s'étendent dans une direction transversale (Q) orientée perpendiculairement à la direction longitudinale (L) du substrat en forme de bande (8), dans laquelle une première piste conductrice principale (4a) est disposée dans la région d'un premier bord extérieur longitudinal du support en forme de bande (8), qui est en contact électrique avec un premier ensemble de circuits conducteurs secondaires (5a) parallèles et espacées les unes des autres, et une deuxième piste conductrice principale (4b) est disposée dans la région d'un deuxième bord extérieur longitudinal du support en forme de bande (8), qui est en contact électrique avec un deuxième ensemble de circuits conducteurs secondaires (5b) parallèles et espacées les unes des autres, dans lequel, vu dans la direction longitudinale (L) du support en bande (8), une piste conductrice secondaire (5a) du premier assemblage suit une piste conductrice secondaire (5b) du second assemblage et chaque piste conductrice secondaire (5a) du premier assemblage a une piste conductrice secondaire (5b) du deuxième ensemble qui lui est attribué dans chaque cas, **caractérisé en ce que** des circuits conducteurs intérieures (7) sont prévues pour relier électriquement les éléments de résistance CTP (6) aux circuits conducteurs secondaires (5) qui lui sont attribuées dans chaque cas, et que les circuits conducteurs secondaires (5), Les circuits conducteurs secondaires (5), qui sont respectivement affectées l'une à l'autre, forment des régions de surface chauffante (1) en forme de bande, qui s'étendent dans la direction transversale (Q), entre lesquelles sont formées des zones de séparation (2) en forme de bande, qui s'étendent dans la direction transversale (Q) et sont exemptes de pistes conducteurs secondaires (5) et de pistes conducteurs intérieures (7).

2. Tapis chauffant en forme de bande selon la revendication 1, **caractérisé en ce que** dans une zone de surface chauffante (1) en forme de bande sont disposés plusieurs éléments chauffants (3) disposés répartis en circuit parallèle les uns par rapport aux autres entre les circuits conducteurs secondaires (5) respectivement attribués les uns aux autres, sur la direction transversale (Q) du support en forme de bande (8), sachant que les éléments chauffants (3) sont respectivement formés à partir d'une succession d'éléments à résistance CTP (6), qui sont reliés les uns aux autres au moyen des circuits conducteurs intérieurs (7) dans une connexion en série et aux circuits conducteurs secondaires (5) de la zone de surface chauffante (1) concernée.

3. Tapis chauffant en forme de bande selon la revendication 1 ou 2, **caractérisé en ce que** concernant le support en forme de bande (8), il s'agit d'une feuille de matière plastique.

4. Tapis chauffant en forme de bande selon l'une quelconque des revendications 1 à 3, **caractérisé en ce que** les éléments à résistance CTP (6) sont fabriqués à partir d'une pâte durcie, à base de carbone.

5. Tapis chauffant en forme de bande selon l'une quelconque des revendications 1 à 4, **caractérisé en ce que** les circuits conducteurs (4, 5, 7) sont fabriqués à partir d'une pâte durcie, à base d'argent.

6. Tapis chauffant en forme de bande selon l'une quelconque des revendications 1 à 5, **caractérisé en ce que** les éléments à résistance CTP (6) reliant un circuit conducteur secondaire (5a) du premier réseau au circuit conducteur secondaire (5b) qui lui est attribué du deuxième réseau sont respectivement exécutés sous la forme d'éléments en bandes disposés les uns à côté des autres et en direction longitudinale (L) du support en forme de bande (8).

7. Tapis chauffant en forme de bande selon l'une quelconque des revendications 1 à 6, **caractérisé en ce que** les éléments chauffants (3) et les circuits conducteurs (4, 5, 7) sont disposés sur la même surface du support en forme de bande (8) et une couche d'aluminium est disposée sur la surface opposée du support en forme de bande (8).

8. Tapis chauffant en forme de bande selon la revendication 7, **caractérisé en ce que** la couche d'aluminium ne s'étend que sur la zone centrale du support en forme de bande (8) et une zone de bord le long des deux bords longitudinaux est dépourvue d'aluminium dans laquelle passent les circuits conducteurs principaux (4) sur la surface opposée.

9. Tapis chauffant en forme de bande selon l'une quelconque des revendications 1 à 8, **caractérisé en ce que** les points de connexion sont disposés sur les circuits conducteurs principaux (4) et sont respectivement exécutés sous la forme d'un élément de mise en contact (12) avec une pièce de connexion en forme de plaquette revêtue de cuivre, qui est dotée sur une première surface de plaquette d'une surface adhésive électroconductrice pour réaliser une liaison adhésive électroconductrice avec le circuit conducteur principal respectif (4).
